# FASCICULE DE BREVET EUROPEEN

(11) **EP 0 457 627 B1**
(45) Date de publication et mention de la délivrance du brevet: **19.01.1994**
(21) Numéro de dépôt: 91400702.6
(22) Date de dépôt: 15.03.1991
(51) Int. Cl.: B23P 19/00, B23P 19/08

(54) **Dispositif pour alimenter en segments une machine, notamment automatique, pour placer des segments sur des pistons de moteur à combustion interne**
Vorrichtung zum Zuführen von Ringen zu einer automatischen Maschine zum Setzen von Ringen auf Verbrennungsmotorkolben
Device for feeding rings to an automatic machine for fitting rings on internal combustion motor pistons

(30) Priorité: 14.05.1990 FR 9005982
(43) Date de publication de la demande: 21.11.1991
(73) Titulaire: RENAULT AUTOMATION, 92109 Boulogne-Billancourt (FR)
(72) Inventeur: Caron, René, F-92110 Clichy (FR)
(74) Mandataire: Ernst-Schonberg, Michel

(56) Documents cités:
- EP-A- 0 341 161
- PATENT ABSTRACTS OF JAPAN vol. 11, no. 302 (M-629)(2749) 02 octobre 1987,& JP-A-62 94229 (SANYO) 30 avril 1987,

## Description

La présente invention est relative à un dispositif pour alimenter en segments, notamment automatiques, une machine à placer des segments sur des pistons de moteurs à combustion interne. Un tel dispositif est connu par exemple de EP-A-0 341 161.

Typiquement, une installation automatique pour placer des segments sur des pistons comprend :
- un poste de réception apte à recevoir des segments empilés verticalement les uns sur les autres,
- une pièce de transfert, dont une partie au moins comporte une surface horizontale qui présente une rainure circulaire de dimension convenable pour recevoir un segment,
- une ogive à axe vertical, s'élargissant vers le haut et sur laquelle, ou en partie dans laquelle, peut être posé un piston,
- des moyens pour déplacer la pièce de transfert entre une position de réception, où la rainure circulaire est coaxiale à la pile de segments et sous celle-ci, et une position de prélèvement, où la rainure circulaire est coaxiale à l'ogive et sous celle-ci, et
- un organe de mise en place, apte à déplacer vers le haut un segment se trouvant dans la rainure circulaire en position de prélèvement, et à le faire coulisser vers le haut le long de la surface extérieure de l'ogive et du piston jusqu'à la gorge du piston où ledit segment doit être placé. Typiquement, la pièce de transfert est constituée comme un tiroir qui se déplace horizontalement entre ses deux positions de réception et de prélèvement.

Les segments étant, comme on le sait, constitués par des anneaux brisés, il importe que la fente du segment soit un emplacement angulaire précis, c'est-à-dire qu'il est généralement prévu des moyens pour empêcher une rotation du segment sur son axe pendant les manipulations.

De telles installations fonctionnent sans incident pour la mise en place de divers types de segments, tels que des segments d'étanchéité ou des segments racleurs. Cependant, dans le cas de segments écarteurs, qui ont une forme relativement compliquée, avec des surfaces extrêmes non planes, il arrive que les segments successifs placés sur la pile s'accrochent les uns aux autres, ce qui crée des incidents de fonctionnement, avec arrêt de la machine sans compter des dégâts éventuels plus graves.

La présente invention a pour but d'éviter le risque de tels incidents. Il est cependant préférable que ce dispositif soit d'une telle simplicité qu'il puisse, sans charger les prix de revient, être utilisé pour des segments de toutes formes géométriques.

L'invention fournit en conséquence un dispositif pour alimenter en segments un manchon à placer les segments sur des pistons de moteur à combustion interne, ce dispositif comportant :
- un poste de réception, apte à recevoir des segments empilés verticalement les uns sur les autres,
- une pièce de transfert dont une partie au moins comporte une surface horizontale qui présente une rainure circulaire de dimensions convenables pour recevoir un segment,
- des moyens d'extraction, aptes à extraire un à un les segments empilés du poste de réception pour les déposer dans la rainure circulaire, et
- des moyens pour déplacer la pièce de transfert entre une position de réception, où la rainure circulaire est coaxiale à la pile de segments et sous celle-ci, et une position de prélèvement, où la rainure circulaire est dans un poste de mise en place, dans lequel un segment contenu dans ladite rainure circulaire peut en être extrait pour être placé sur un piston,

ce dispositif ayant pour particularité que les moyens d'extraction comprennent :
- une pièce d'arrêt comportant un flasque annulaire horizontal de diamètre supérieur au diamètre intérieur des segments de la pile, solidaire d'une partie cylindrique verticale, le diamètre extérieur un peu inférieur au diamètre intérieur des segments de la pile, cette pièce d'arrêt étant disposée à la base de la pile,
- au moins deux bras écarteurs, passant à travers ladite partie cylindrique par des lumières situées immédiatement au-dessus du flasque, ces bras ayant une dimension verticale au plus égale à la hauteur d'un segment, et étant disposés pour élargir le segment inférieur de la pile jusqu'à un diamètre intérieur légèrement supérieur au diamètre extérieur du flasque,
- un manchon pousseur, vertical, coaxial à la pièce d'arrêt, de diamètre intérieur légèrement supérieur au diamètre extérieur du flasque, ce manchon étant mobile verticalement pour pousser vers le bas un segment élargi par les bras écarteurs, en le faisant glisser le long des surfaces extérieures des bras écarteurs et du flasque, pour le faire tomber dans la rainure circulaire.

Suivant une réalisation préférée, il est prévu trois bras écarteurs disposés à 120°, portés par un mandrin écarteur à axe vertical actionné par un vérin unique.

Avantageusement, la rainure circulaire est limitée par un bord extérieur de diamètre seulement légèrement supérieur au diamètre extérieur d'un segment élargi par les bras écarteurs, et un bord intérieur de diamètre seulement légèrement inférieur au diamètre intérieur d'un segment qui n'est pas élargi.

L'invention va maintenant être exposée de façon plus détaillée à l'aide d'un exemple de réalisation, illustré avec les dessins parmi lesquels :
Figure 1 est une vue éclatée en perspective d'un piston avec ses segments,
Figures 2A, 2B, 2C sont respectivement des vues partielles, très agrandies, d'un segment écarteur, respectivement de l'extérieur, de l'intérieur, et en coupe suivant un plan axial,
Figure 3 est une vue schématique, en coupe et partiellement en élévation d'une machine à placer des segments sur des pistons, et
Figure 4 est une vue schématique, en coupe, du dispositif selon l'invention.

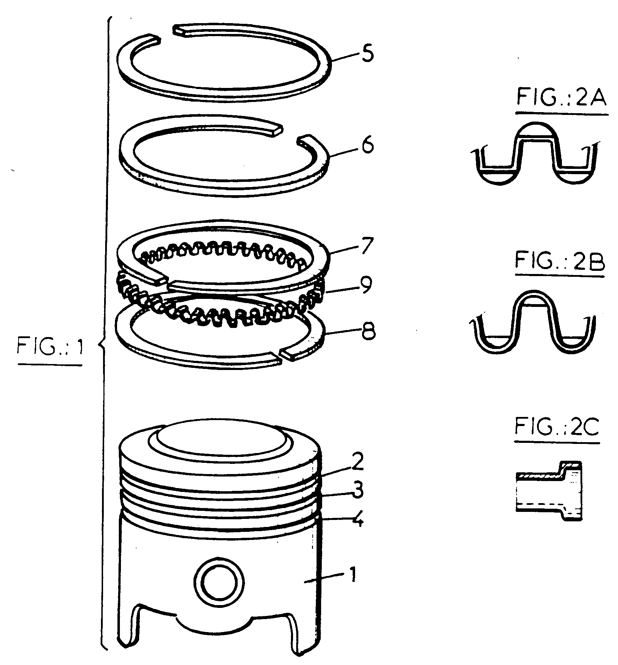

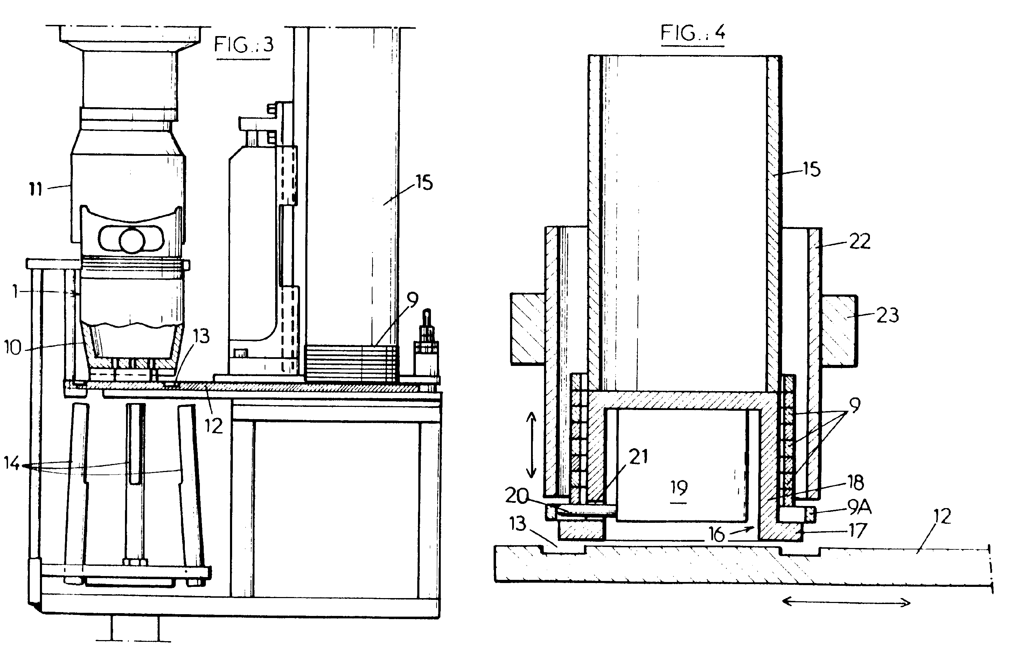

La figure 1 montre un piston 1 dont la surface extérieure comporte trois gorges successives 2, 3, 4. La gorge 2, la plus près du sommet du piston, contient un segment 5 dit "de coup de feu", la deuxième gorge contient un segment d'étanchéité 6, et la gorge 4 contient un segment composite racleur formé de deux anneaux plats minces 7, 8, entre lesquels est disposé un segment élastique intermédiaire 9, dit "segment expandeur". La forme du segment expandeur est explicitée de façon plus claire à l'aide des figures 2A, 2B et 3C. Dans son ensemble, le segment expandeur 9 a la forme d'une collerette ondulée. Vues de l'extérieur, les ondulations sont sensiblement trapézoïdales, voir figure 2A, alors que vues de l'intérieur du segment, elles sont de forme sinusoïdale. La figure 2C montre que les sommets des ondulations du côté extérieur forment des surfaces à peu près planes, alors que du côté intérieur, elles forment des surfaces tronconiques. On conçoit que cette forme est destinée à pousser vers l'extérieur les segments minces racleurs 7 et 8, de façon à les mettre en bon appui contre la paroi intérieure du cylindre dans laquelle le piston est appelé à se mouvoir, tout en maintenant un écartement correct entre les segments racleurs.

La forme relativement compliquée du segment expandeur 9 explique que, lorsqu'une série de tels segments sont empilés les uns dans les autres, il arrive qu'ils s'accrochent et s'enchevêtrent les uns avec les autres.

La figure 3 est une vue schématique d'ensemble d'une machine à monter les segments sur les pistons. Un piston 1 est disposé, la tête en bas, sur une "ogive" 10, qui a plutôt la forme d'un tronc de cône s'élargissant vers le haut. Un dispositif de manutention 11 amène le piston 1 sur l'ogive, à la hauteur convenable, de façon que les surfaces extérieures du piston 1 et de l'ogive 10 viennent sensiblement en prolongement. Une pièce de transfert 12 est conçue comme un tiroir, c'est-à-dire une plaque horizontale qui peut coulisser en va-et-vient dans son plan, et présente une rainure circulaire 13, de diamètre sensiblement égal à celui d'un segment.

Un organe de mise en place 14 est constitué par plusieurs doigts flexibles, mobiles de haut en bas, qui pénètrent par le bas dans des lumières de la rainure 13 pour pousser vers le haut le segment qui s'y trouve, et le faire glisser le long des surfaces extérieures de l'ogive 10 et du piston 1, et s'arrêter au niveau de la gorge 2, 3 ou 4 convenable.

La pièce de transfert 12 peut déplacer sa rainure 13 entre le voisinage de l'ogive et un poste de réception des segments, qui comprend une colonne verticale 15, autour de laquelle sont enfilés une série de segments 9. Les moyens pour faire passer un à un les segments 9 dans la rainure 13, qui sont l'objet essentiel de l'invention, sont décrits à la figure 4. Sur cette figure, une série de segments 9 sont disposés à l'intérieur de la colonne 15. Celle-ci est continuée vers le bas par une pièce 16, qui présente un flasque 17 à sa partie inférieure, et, à sa partie supérieure, une partie cylindrique 18, qui vient en prolongement de la colonne 15. Le diamètre extérieur du flasque 17 est un peu supérieur à celui des segments 9 empilés autour de la surface cylindrique 18. Une pièce d'expansion 19, conçue comme un expandeur à trois mors, à actionnement pneumatique, possède trois "mors" 20, dont un seul est représenté, qui peuvent passer à travers des lumières 21 de la partie cylindrique 18, juste au-dessus du flasque 17. La hauteur des mors 20 est un peu inférieure à celle d'un segment 9.

Un manchon-poussoir 22, soutenu par des moyens de guidage 23, peut coulisser verticalement. Il est coaxial à la colonne 15 et à la partie cylindrique 18, et son diamètre est très légèrement supérieur au diamètre extérieur du flasque 17. On conçoit que le manchon-poussoir 22, en se déplaçant verticalement, puisse pousser un segment 9A, écarté par les mors 20, pour le faire coulisser contre la paroi extérieure des mors 20, puis du flasque 17. Le tiroir de transfert 12 se trouve placé juste au-dessous du flasque 17, c'est-à-dire que l'espace entre ces deux pièces est inférieur à la hauteur d'un segment 9. En poursuivant sa course, le manchon-poussoir 22 fait tomber le segment 9A dans la rainure 13. Le diamètre du bord extérieur de la rainure 13 est suffisamment grand pour permettre au segment 9A d'y pénétrer, cependant que le diamètre de son bord intérieur est suffisamment petit pour que le segment 9A puisse y revenir, par élasticité, à son diamètre normal de repos, mais sans jeu qui pourrait gêner les opérations ultérieures. Les doigts 14 de l'organe de mise en place du segment sur le cylindre n'auront donc pas de difficulté pour extraire le segment de la rainure. La face inférieure du flasque 17 permet d'éviter que le retour du segment à son diamètre initial n'amène un rebond qui pourrait faire sortir le segment de la rainure 13.

Le dispositif peut être utilisé avec des segments de forme diverse. Il suffit que l'épaisseur des mors 20 soit inférieure, ou éventuellement égale, à la hauteur d'un segment 9. Un changement éventuel des extrémités de mors est une opération qui peut être réalisée de façon simple.

## Revendications

1. Dispositif pour alimenter en segments une machine à placer les segments (9) sur des pistons (1) de moteur à combustion interne, ce dispositif comportant :
- un poste de réception (15), apte à recevoir des segments empilés verticalement les uns sur les autres,
- une pièce de transfert (12) dont une partie au moins comporte une surface horizontale qui présente une rainure circulaire ( 13 ) de dimensions convenables pour recevoir un segment,
- des moyens d'extraction, aptes à extraire un à un les segments empilés du poste de réception pour les déposer dans la rainure circulaire, et
- des moyens pour déplacer la pièce de transfert (12) entre une position de réception, où la rainure circulaire est coaxiale à la pile de segments (9) et sous celle-ci, et une position de prélèvement, où la rainure circulaire est dans un poste de mise en place, dans lequel un segment (9) contenu dans ladite rainure circulaire peut en être extrait pour être placé sur un piston (1),
caractérisé en ce que les moyens d'extraction comprennent :
- une pièce d'arrêt (16) comportant un flasque annulaire horizontal (17) de diamètre supérieur au diamètre intérieur des segments (9) de la pile, solidaire d'une partie cylindrique verticale (18) le diamètre extérieur un peu inférieur au diamètre intérieur des segments de la pile, cette pièce d'arrêt étant disposée à la base de la pile,
- au moins deux bras écarteurs (20), passant à travers ladite partie cylindrique par des lumières (21) situées immédiatement au-dessus du flasque, ces bras ayant une dimension verticale au plus égale à la hauteur d'un segment, et étant disposés pour élargir le segment inférieur (9A) de la pile jusqu'à un diamètre intérieur légèrement supérieur au diamètre extérieur du flasque,
- un manchon pousseur (22), vertical, coaxial à la pièce d'arrêt, de diamètre intérieur légèrement supérieur au diamètre extérieur du flasque, ce manchon étant mobile verticalement pour pousser vers le bas un segment élargi par les bras écarteurs, en le faisant glisser le long des surfaces extérieures des bras écarteurs (20) et du flasque (17), pour le faire tomber dans la rainure circulaire.

2. Dispositif selon la revendication 1, caractérisé en ce qu'il est prévu trois bras écarteurs (20) disposés à 120°, portés par un mandrin (19) écarteur à axe vertical actionné par un vérin unique.

3. Dispositif selon la revendication 1 ou 2, caractérisé en ce que la rainure circulaire (13) est limitée par un bord extérieur de diamètre seulement légèrement supérieur au diamètre extérieur d'un segment (9A) élargi par les bras écarteurs (20), et un bord intérieur de diamètre seulement légèrement inférieur au diamètre intérieur d'un segment (9) qui n'est pas élargi.

## Patentansprüche

1. Vorrichtung zum Zuführen von Kolbenringen zu einer Maschine zum Setzen der Kolbenringe (9) auf die Kolben (1) von Verbrennungsmotoren, wobei diese Vorrichtung aufweist:
- eine Aufnahmestation (15) zur Aufnahme der senkrecht übereinander gestapelten Ringe,
- ein Übergabeteil (12), dessen einer Abschnitt wenigstens eine waagrechte Fläche aufweist, die mit einer kreisförmigen Nut (13) versehen ist mit einer geeigneten Abmessung zur Aufnahme eines Kolbenringes,
- eine Abzugsanordnung, um die übereinander gestapelten Kolbenringe von der Aufnahmestation einzeln abzunehmen und sie in die kreisförmige Nut einzulegen und
- eine Anordnung zum Verschieben des Übergabeteils (12) zwischen einer Aufnahmestellung, in der die kreisförmige Nut koaxial zum und unter dem Stapel der Kolbenringe (9) ist und einer Abgabestellung, in der die kreisförmige Nut in einer Setzstellung ist, in der ein in der kreisförmigen Nut eingelegter Kolbenring (9) abgenommen werden kann, um auf einem Kolben (1) gesetzt zu werden,
dadurch gekennzeichnet, daß die Abzugsanordnung aufweist:
- ein Halteteil (16) mit einem ringförmigen waagrechten Flansch (17), dessen Durchmesser größer ist als der Innendurchmesser der Kolbenringe (9) des Stapels und fest verbunden ist mit einem senkrechten zylindrischen Abschnitt (18), dessen Außendurchmesser etwas kleiner ist als der Innendurchmesser der Kolbenringe des Stapels, wobei das Halteteil am Boden des Stapels angeordnet ist,
- wenigstens zwei Spreizarme (20), die unmittelbar oberhalb des Flansches vorgesehene Öffnungen (21) im zylindrischen Abschnitt durchsetzen, wobei die Arme eine vertikale Abmessung aufweisen, die höchstens gleich der Höhe des Kolbenringes ist und derart angeordnet sind, daß sie den untersten Kolbenring (9A) des Stapels so weit aufweiten, bis sein Innendurchmesser geringfügig größer ist als der Außendurchmesser des Flansches,
- eine senkrechte Stoßbuchse (22) koaxial zum Halteteil, deren Innendurchmesser nur geringfügig größer ist als der Außendurchmesser des Flansches, wobei die Buchse in senkrechter Richtung beweglich ist, um einen durch die Spreizarme aufgeweiteten Kolbenring zu bewegen, indem er an den Außenflanken der Spreizarme (20) und des Flansches (17) entlang gleitet, um in die kreisförmige Nut zu fallen.

2. Vorrichtung nach Anspruch 1, dadurch gekennzeichnet, daß drei Spreizarme (20) vorgesehen sind, die unter 120° zueinander angeordnet sind und von einem Spreiz-Spannfutter (19) mit senkrechter Achse getragen werden, welches durch einen einzigen Druckzylinder betätigt wird.

3. Vorrichtung nach Ansprüchen 1 oder 2, dadurch gekennzeichnet, daß die kreisförmige Nut (13) von einem Außenrand begrenzt wird, dessen Durchmesser nur geringfügig größer als der Außendurchmesser eines durch die Spreizarme (20) aufgeweiteten Kolbenrings (9A) ist und von einem Innenrand begrenzt werden, dessen Durchmesser nur geringfügig kleiner ist als der Innendurchmesser eines nicht aufgeweiteten Kolbenringes (9).

## Claims

1. A device for feeding rings to a machine for fitting the rings (9) on the pistons (1) of internal combustion engines, which device comprises:
- a reception station (15) adapted to receive rings stacked vertically on one another,
- a transfer member (12), at least a portion of which comprises a horizontal surface comprising a circular groove (13) of dimensions adapted to receive a ring,
- extraction means adapted to extract the stacked rings one by one from the reception station in order to dispose them in the circular groove,
- means for displacing the transfer member (12) between a reception position, in which the circular groove is coaxial with and below the stack of rings (9), and a take-up position in which the circular groove is in a fitting station in which a ring (9) contained in the circular groove may be extracted therefrom to be fitted on a piston (1),
characterized in that the extraction means comprise:
- a stop member (16) comprising an annular horizontal flange (17) of a diameter greater than the inner diameter of the rings (9) of the stack, rigid with a vertical cylindrical portion (18), the outer diameter being slightly smaller than the inner diameter of the rings of the stack, this stop member being disposed at the base of the stack,
- at least two spacer arms (20), passing through the cylindrical portion via slots (21) disposed immediately above the flange, these arms having a vertical dimension at most equal to the height of a ring and being disposed to widen the lower ring (9A) of the stack to an inner diameter which is slightly greater than the outer diameter of the flange,
- a vertical thrust sleeve (22) coaxial with the stop member, whose inner diameter is slightly greater than the outer diameter of the flange, this sleeve moving vertically in order to push a ring widened by the spacer arms downwards causing it to slide along the outer surfaces of the spacer arms (20) and the flange (17) in order to cause it to fall into the circular groove.

2. A device as claimed in claim 1, characterized in that three spacer arms (20) disposed at 120° are provided and are borne by a spacer spindle (19) of vertical axis actuated by a single jack.

3. A device as claimed in claim 1 or 2, characterized in that the circular groove (13) is bounded by an outer edge of a diameter only slightly greater than the outer diameter of a ring (9A) widened by the spacer arms (20), and an inner edge of a diameter only slightly smaller than the inner diameter of a ring (9) which is not widened.
